# EUROPEAN PATENT SPECIFICATION

(11) **EP 1 457 989 B1**
(45) Date of publication and mention of the grant of the patent: **14.05.2008**
(21) Application number: 04005555.0
(22) Date of filing: 09.03.2004
(51) Int. Cl.: G11B 27/02, G11B 27/00, G11B 27/36, G11B 27/032, H04N 5/262, H04N 5/265

(54) **Video editing system based on real time recording of switching operations and preparing an after take digest edit list using thumbnails.**
Vorrichtung zum Editieren von Bildmaterial mit Echtzeit Speicherung von Schaltfunktionen und mit nachtraeglicher Vorbereitung einer Schnittliste mit Indexbildern.
Dispositif de video edition base sur l' enregistrement en temps reel des operations de switch et sur la preparation apres coup d' une edit liste reduite utilisant des icones.

(30) Priority: 11.03.2003 JP 2003065768
(43) Date of publication of application: 15.09.2004
(73) Proprietor: Sony Corporation, Tokyo (JP)
(72) Inventor: Takehana, Masashi, Shinagawa-ku Tokyo (JP)
(74) Representative: Melzer, Wolfgang

(56) References cited:
- EP-A- 0 438 299
- US-A- 5 307 456
- US-A- 5 519 828
- US-A1- 2002 175 931

## Description

### BACKGROUND OF THE INVENTION

### FIELD OF THE INVENTION

The present invention relates to a picture material editing apparatus and a picture material editing method, and is preferably applicable to a video editing apparatus for creating a so-called edit list in which the contents to be edited are specified based on multiple kinds of picture materials, for example.

### DESCRIPTION OF THE RELATED ART

video editing apparatuses have been adapted to control multiple reproducing VTRs (video tape recorders) mounted with a prerecorded video tape and record, with a recording VTR, edited pictures generated by switching multiple kinds of reproduced pictures obtained with the multiple reproducing VTRs using a video switcher or overlapping the reproduced pictures (see EP1001623 or US6744969, for example).

The video switcher is used not only for the purpose of editing but also for arbitrarily switching or overlapping pictures inputted from multiple cameras when lively broadcasting or recording a concert or a sports game, and it is also adapted to lively broadcast the output pictures immediately or record them to a video tape.

Generally, a worker operating the switcher or a worker responsible for edit operations, or people involved prepare a memorandum showing which scenes were actually used by switching cameras in order to facilitate edit work to be performed later.

In such a video editing apparatus, when performing edit work, a worker is required to gather recorded video tapes for which recording has been performed with multiple cameras immediately after live broadcast is finished and rewind the tape to positions to be edited to connect highlight scenes of the recorded video tapes by reading the memorandum while actually monitoring recorded pictures being reproduced by multiple reproducing VTRs, and therefore the worker is forced to spend a lot of time and do troublesome work.

A picture material editing apparatus in which all features of the precharacterizing part of claim 1 are disclosed, is described in XP002026373, "High-Level Switcher Interface Improves Editing Techniques", Rayner, B., SMPTE Journal No 8, August 1985, Scarsdale, USA.

A picture material editing apparatus in which, based on a created edit list, a video switcher switches and outputs multiple picture materials inputted from multiple sources is known from US 2002/175931 A1.

Further, there is known from US-A-5 519 828 a video editing apparatus adapted to store and display a small and representative sample of each video frame in order to provide a video pictorial editing timeline of a underlying stored video.

### SUMMARY OF THE INVENTION

It is an object of this invention is to provide a picture material editing apparatus and a picture material editing method capable of easily creating an edit list in a short time without forcing a worker to spend a lot of time and do troublesome work.

This object is achieved by a picture material editing apparatus and a picture material editing method according to the enclosed independent claims. Advantageous features of the present invention are defined in the corresponding subclaims.

### BRIEF DESCRIPTION OF THE DRAWINGS

In the accompanying drawings:
Fig. 1 is a schematic block diagram showing the configuration of a video editing apparatus of the present invention;
Fig. 2 is a flowchart showing an edit list creation procedure;
Fig. 3 is a schematic diagram showing an edit list;
Fig. 4 is a schematic diagram provided for illustrating generation of edited pictures based on the edit list;
Fig. 5 is a schematic diagram provided for illustrating edited pictures recorded to a video tape;
Fig. 6 is a flowchart showing a digest-version edit list creation procedure;
Fig. 7 is a schematic diagram showing a digest-version edit list;
Fig. 8 is a schematic diagram provided for illustrating generation of digest-version edited pictures based on the digest-version edit list;
Fig. 9 is a schematic diagram provided for illustrating digest-version edited pictures recorded to a video tape; and
Fig. 10 is a schematic block diagram showing the configuration of a video editing apparatus according to another embodiments.

### DETAILED DESCRIPTION OF THE EMBODIMENT

Preferred embodiments of this invention will be described with reference to the accompanying drawings:
(1) Configuration of video editing apparatus

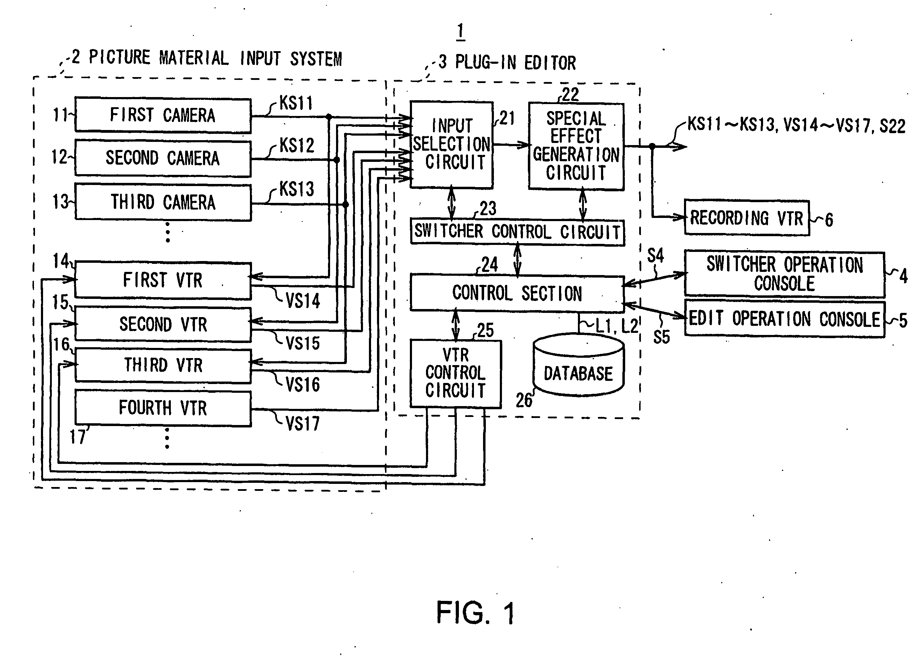

In Fig. 1, "1" denotes the entire video editing apparatus, which mainly comprises a picture material input system 2, a plug-in editor 3 as a picture material editing apparatus according to the present invention which is provided with a switcher function and an edit function for picture materials inputted from the picture material input system 2, a switcher operation console 4 for performing a switcher operation for picture materials, and an edit operation console 5 for performing an edit operation for picture materials.

The picture material input system 2 has multiple cameras such as a first camera 11, a second camera 12, a third camera 13 and so on, and multiple VTRs such as a first VTR 14, a second VTR 15, a third VTR 16, a fourth VTR 17 and so on.

This picture material input system 2 is adapted to provide camera picture signals KS11 to KS13 from the first to third cameras 11 to 13, to the first to third VTRs 14 to 16, and also send them to an input selection circuit 21 of the plug-in editor 3 Similarly, it is also adapted to output reproduced picture signals VS14 to VS16 from the first to third VTRs 14 to 16 to the input selection circuit 21 of the plug-in editor 3.

Substantially, the picture material input system 2 is adapted to be able to record the camera picture signals KS11 to KS13 from the first to third cameras 11 to 13 with the first to third VTRs 14 to 16 while outputting the camera picture signals KS11 to KS13 to the input selection circuit 21 of the plug-in editor 3, and also output the reproduced picture signals VS14 to VS16 reproduced by the first to third VTRs 14 to 16 to the input selection circuit 21 of the plug-in editor 3.

Accordingly, the plug-in editor 3 is adapted to select any of the camera picture signals KS11 to KS13 from the first to third cameras 11 to 13 with the input selection circuit 21 and output them to perform live broadcast, and meanwhile it records the camera picture signals KS11 to KS13 to video tapes with the first to third VTRs 14 to 16, so that the reproduced picture signals VS14 to VS16 corresponding to the camera picture signals KS11 to KS13, which are reproduced by the fist to third VTRs 14 to 16, can be used as materials for generation of edited pictures later.

The fourth VTR 17 provided for the picture material input system 2 is used for reproducing a recorded tape to which past picture material has been prerecorded, for example, and is adapted to be able to output reproduced picture signals VS17 obtained as the result of reproducing the recorded tape to the input selection circuit 21 of the plug-in editor 3.

Thus, the plug-in editor 3 is adapted to use not only the reproduced picture signals VS14 to VS16 from the first to third VTRs 14 to 16 but also the reproduced picture signals VS17 from the fourth VTR 17 as a target to be edited when editing picture materials.

The switcher operation console 4 is adapted to be able to display each of the camera picture signals KS11 to KS13 from the first to third cameras 11 to 13 and the reproduced picture signals VS14 to VS17 from the first to fourth VTRs 14 to 17 on monitors (not shown), and thereby cause a worker to perform switcher operations, such as switching to any of the camera picture signals KS11 to KS13 and the reproduced picture signals VS14 to VS17 that he desires, overlapping the signals, and adding a special effect, while visually checking the signals.

The switcher operation console 4 is adapted to, when such a switcher operation is performed, output a control signal S4 corresponding to the switcher operation performed by the worker to a control section 24 of the plug-in editor 3.

The edit operation console 5 is adapted to be able to display each of the camera picture signals KS11 to KS13 from the first to third cameras 11 to 13 and the reproduced picture signals VS14 to VS17 from the first to fourth VTRs 14 to 17 on monitors (not shown), and thereby cause a worker to perform edit operations, such as switching to any of the camera picture signals KS11 to KS13 and the reproduced picture signals VS14 to VS17 including a highlight scene that the worker desires, overlapping the signals, and adding a special effect, while visually checking the signals.

The edit operation console 5 is also adapted to enable the worker to perform an edit operation for a digest version of collecting, for example, only a part of the reproduced picture signals VS14 to VS17 having highlight scenes that the worker desires, from among the reproduced picture signals VS14 to VS17 reproduced by the first to fourth VTRs 14 to 17, and editing them into a collection of good scenes.

The edit operation console 5 is adapted to, when such an edit operation is performed by the worker, output a control signal S5 based on the edit operation performed by the worker to a control section 24 of the plug-in editor 3

Substantially, the plug-in editor 3 is also a switcher configured to have an edit processing function together with the switcher function. Its control section 24 for controlling the entire plug-in editor overall can share the control signal S4 from the switcher operation console 4 and the control signal S5 from the edit operation console 5, and is adapted to control the switcher control circuit 23 and a VTR control circuit 25 based on the control signal S4 and the control signal S5 and manage a database 26 storing edit lists to be described later, switcher setting information set with the switcher operation console 4, various setup information and the like.

The control section 24 is configured to have a CPU (central processing unit), a ROM (read only memory) and a RAM (random access memory) and adapted to execute an edit list creation procedure, a digest-version edit list creation procedure and the like, which will be described later, in accordance with a base program or various application programs read from the ROM and developed in the RAM.

The control section 24 provides a system clock for the first to fourth VTRs 14 to 17 via the VTR control circuit 25, and thereby the first to fourth VTRs 14 to 17 are caused to operate according to time codes based on the common system clock.

Note that the control section 24 may cause the first to fourth VTRs 14 to 17 to perform recording based on the time code common to the entire system which is separately provided (not shown) via the VTR control circuit 25, and the time code for recording is not always required to be common.

The switcher control circuit 23 is adapted to control the input selection circuit 21 and a special effect generation circuit 22, and the VTR control circuit 25 is adapted to control reproduction by the first to fourth VTRs 14 to 17.

Substantially, the plug-in editor 3 acquires the camera picture signals KS11 to KS13 provided from the first to third cameras 11 to 13 and the reproduced picture signals KS14 to KS17 provided from the first to fourth VTRs 14 to 17 into the input selection circuit 21.

The input selection circuit 21 selects any of the camera picture signals KS11 to KS13 and the reproduced picture signals VS14 to VS17, which has been selected and determined by the worker with the switcher operation console 4, based on picture switching signals sequentially provided from the switcher control circuit 23 based on switcher operations performed on the switcher operation console 4, and sequentially sends the selection results to the special effect generation circuit 22.

The special effect generation circuit 22 is adapted to add various special effects, such as "Mix" for switching from the previous picture to the next picture by mixing the pictures, "Wipe" for switching to the next picture by wiping out the previous picture, and "Key" for cutting out a part of the original picture to fit a different picture therein, to any of the camera picture signals KS11 to KS13 and the reproduced picture signals VS14 to VS17 provided from the input selection circuit 21, based on a special effect specification signal given by a switcher operation on the switcher operation console 4 via the switcher control circuit 23, and is also adapted to output a special effect picture signal S22 obtained as a result.

The special effect generation circuit 22 is adapted to directly output the special effect picture signal S22 and provide it for broadcast in the case of live broadcast, or record it to a video tape with an external recording VTR 6.

Furthermore, the special effect generation circuit 22 is adapted to output the special effect picture signal S22 to the recording VTR 6 during the edit processing, and eventually record edited picture data obtained as the result of editing, to a video tape with the recording VTR 6.

However, the special effect generation circuit 22 does not necessarily add a special effect but adds a special effect only when a special effect specification signal is given by the switcher control circuit 23. Therefore, there are such cases, of course, where only "Cut" for simply switching from the previous picture to the next picture, that is, only connection of cuts is performed.

Note that the switcher control circuit 23 is also adapted to send status signals indicating a name of any of the first to third cameras 11 to 13 that was selected by the input selection circuit 21, the start time and the end time when any of the camera picture signals KS11 to KS13 was selected, the kind of the special effect which was actually added to the camera picture signals KS11 to KS13 (any of Mix, Wipe, Key and the like), and various information for the kind, to the control section 24 as control signals S4.

Accordingly, the control section 24 is adapted to, while the switcher control circuit 23 is controlling the input selection circuit 21 and the special effect generation circuit 22 to perform actual live broadcast according to the switcher operation of a worker operating the switcher operation console 4, simultaneously create an edit list indicating the content of the switcher operation based on the control signals S4 indicating various status signals from the switcher control circuit 23 and store the created edit list to store in the database 26.

Thereby, the control section 24 is adapted to, even in the case of performing live broadcast while sequentially switching the camera picture signals KS11 to KS13 filmed by the first to third cameras 11 to 13 and then immediately performing edit operations to generate edited pictures, be able to control the switcher control circuit 23 and a VTR control circuit 25 in accordance with the edit list stored in the database 26 to immediately generate edited pictures similar to the pictures during live broadcast based on the reproduced picture signals VS14 to VS17 of the first to fourth VTRs 14 to 17.

### (2) Edit list creation procedure with a plug-in editor

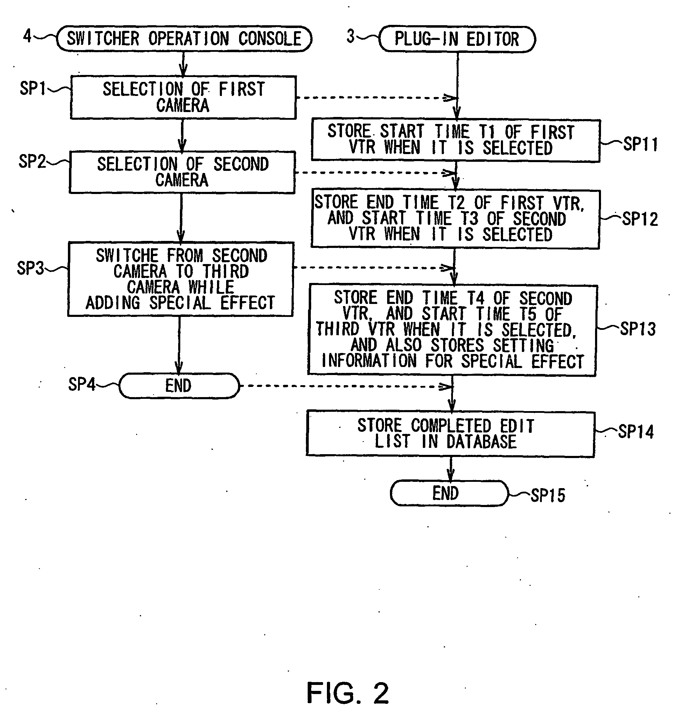

Description will be now made on an edit list creation procedure for creating an edit list based on a switcher operation performed by a worker on the switcher operation console 4 with the control section 24 of the plug-in editor 3 in the video editing apparatus 1 while live broadcast is actually being performed, using the flowchart in Fig. 2.

At step SP1, on recognizing that a switcher operation for selecting and determining the first camera 11 has been performed by a worker, the switcher operation console 4 outputs a control signal S4 for switching camera picture signals KS11 of the first camera 11 to be used for broadcast output to the plug-in editor 3, and then the process proceeds to the next step SP2.

At step SP11, on receiving the control signal S4 from the switcher operation console 4, the control section 24 of the plug-in editor 3 recognizes that the first camera 11 was selected and determined by a switcher operation exactly when the control signal S4 was received. Therefore, it temporarily stores the time code shown when the camera picture signal KS11 of the first camera 11 was recorded by the first VTR 14 as a start time t1, and the process proceeds to the next step SP12.

Note that the control section 24 of the plug-in editor 3 simultaneously causes the input selection circuit 21 to select the camera picture signal KS11 from the first camera 11 in accordance with the control signal S4 and then outputs it for live broadcast.

At step SP2, on recognizing that a switcher operation for selecting and determining the second camera 12 as the next camera has been performed by the worker while the camera picture signals KS11 of the first camera 11 are being outputted for live broadcast, the switcher operation console 4 outputs a control signal S4 for switching the camera picture signals KS12 of the second camera 12 to be used for broadcast output to the plug-in editor 3, and the process proceeds to the next step SP3.

In this case, at step SP12, on receiving the control signal S4 from the switcher operation console 4, the control section 24 of the plug-in editor 3 recognizes that the first camera 11 was switched to the second camera 12 exactly when the control signal S4 was received. Therefore, it temporarily stores the time code indicating the switching timing as an end time t2 of the first VTR 14, and at the same time, it temporarily stores the time code as an end time t3 of the second VTR 15 for the second camera 12. The process then proceeds to the next step SP13.

In this case also, the control section 24 of the plug-in editor 3 simultaneously causes the camera picture signals KS12 of the second camera 12 to be selected and switched from the camera picture signals KS11 of the first camera 11 by the input selection circuit 21 in accordance with the control signal S4, and then outputs it for live broadcast.

At step SP3, on recognizing that a switcher operation for switching from the second camera 12 to the third camera 13 while adding a special effect has been performed by the worker while the camera picture signals KS12 of the second camera 11 are being outputted for live broadcast, the switcher operation console 4 outputs a control signal S4 for switching the second camera 12 to the third camera 13 while adding a special effect, to the plug-in editor 3, and then the process proceeds to the next step SP4.

In this case, at step SP13, on receiving the control signal S4 from the switcher operation console 4, the control section 24 of the plug-in editor 3 recognizes that the second camera 12 is switched to the third camera 13 while a special effect being added exactly when the control signal S4 was received. Therefore, it temporarily stores the time code indicating the switching timing as an end time t4 of the second VTR 15, and at the same time, it temporarily stores the time code as a start time t5 of the third VTR 16 for the third camera 13. Furthermore, it temporarily stores the kind of the special effect and various setting information for the kind, and then the process proceeds to the next step SP14.

To explain the kinds of special effects and various setting information for the kinds, in the case of Mix for switching from the previous picture to the next picture by mixing the pictures, for example, there are provided "Normal Mix", "Non-Additive Mix", "Super Mix", "Preset Color Mix" and the like as the kinds, and "Length of Effect", "Elements To Be Mixed", "Degree of Change", "Color Setting If Any Color Picture Inserted" and the like as the various setting information, that is, adjustment items. There are provided multiple patterns for each of them.

In the case of Wipe for switching to the next picture by wiping the previous picture, there are provided "Standard Wipe", "Enhanced Wipe", "Rotary Wipe", "Mosaic Wipe", "Random Wipe", "Diamond Dust Wipe" and the like as the kinds, and "Length of Effect", "Mix of Effects", "Direction", "Division", "Edge Soft" "Border Width", "Border Color", "Positioner", "Turning Ratio", "Aspect Ratio", "Multi-modulation", "Modulation", "Spring", "Spiral" and the like as the various setting information, that is, adjustment items. There are provided multiple patterns for each of them.

Furthermore, in the case of Digital Multi-effect Wipe for switching to the next picture by wiping the previous picture while performing various deformations such as move, zoom-in, turning, zoom-out, blur, mosaic and the like, there are provided "Slide", "Split", "Squeeze", "Door", "Flip", "Tumble", "Page", "Turn", "Page Roll" and the like as the kinds, and "Length of Effect", "Mix of Effects", "Direction", "Division", "Edge Soft", "Border Width", "Border Color", "Positioner", "Turning Ratio", "Aspect Ratio", "Multi-modulation", "Modulation", "Spring", "Spiral" and the like as the various setting information, that is, adjustment items. There are provided multiple patterns for each of them.

Furthermore, in the case of Key for cutting out a part of the original picture to place a different picture there, there are provided "Linear Key", "Luminance Key", "Chroma Key", "Color Vector Key, "Pattern Key" and the like as kinds, and there are provided multiple patterns as various setting information for each of them.

In this case also, the control section 24 of the plug-in editor 3 causes the camera picture signals KS13 of the third camera 13 to be selected and switched from the camera picture signals KS12 of the second camera 12 by the input selection circuit 21 in accordance with the control signal S4. And then, it causes the special effect generation circuit 22 to add a special effect to the camera picture signals KS13 and outputs a special effect picture signal S22 obtained as a result for live broadcast

At step SP4, the switcher operation console 4 ends the processing by the switcher operation console 4 since the next switcher operation is not performed by the worker.

At step SP14, since the switcher operation on the switcher operation console 4 has ended, the control section 24 of the plug-in editor 3 creates an edit list L1 based on an operation history comprising the start time t1 and the end time t2 of the first VTR 14, the start time t3 and the end time t4 of the second VTR 15, the start time t5 of the third VTR 16, the kinds of special effects and various setting information for the kinds, which have been temporarily stored at steps SP11 to SP13, and stores it in the database 26. The process then proceeds to the next step SP15 and ends.

As described above, the control section 24 of the plug-in editor 3 is adapted to control the switcher control circuit 23 in accordance with the control signal S4 based on a switcher operation on the switcher operation console 4 to cause the input selection circuit 21 and the special effect generation circuit 22 to switch among camera image signals KS11 to KS13 and add a special effect, and then output the signal for live broadcast while temporarily storing time information (start times and end times) on switching operations, kinds of special effects and various setting information for the kinds as an operation history to enable creation of an edit list based thereon.

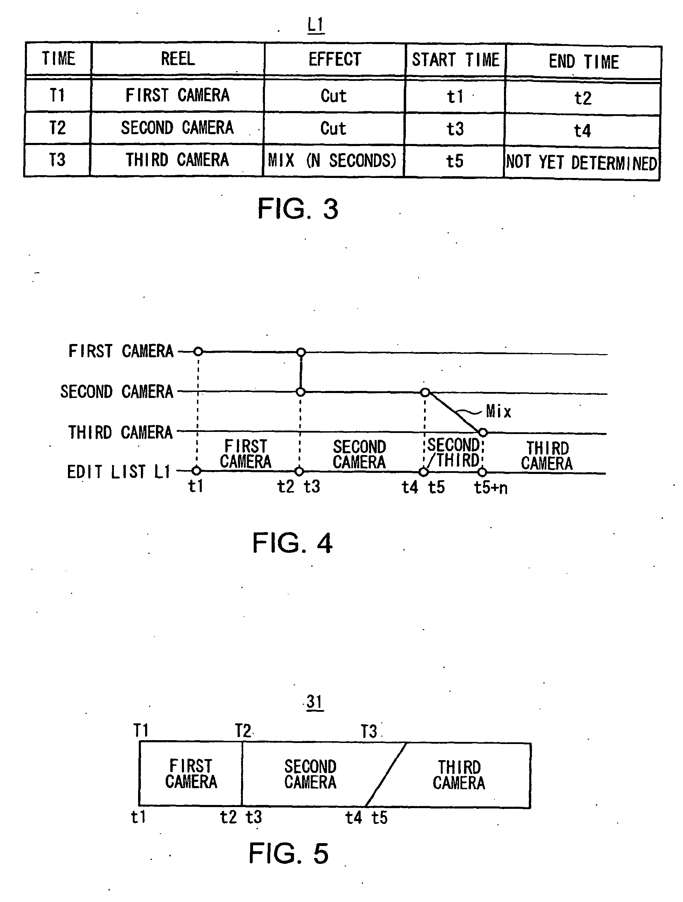

As shown in Fig. 3, the edit list L1 created as described above shows "Time" indicating times T1, T2 and T3 at which edited pictures after edit processing were newly recorded to a video tape with the recording VTR 6, "Reel" indicating the first to third cameras 11 to 13 targeted by switcher operations, "Effect" indicating the kind of a special effect ("Cut", "Mix" and the like), "Start Time (t1, t2 and t3)" and "End Time (t2 and t4)" indicating the time at which the reproduced picture signals VS14 to VS16 corresponding to the camera picture signals KS11 to KS13 of the first to third cameras 11 to 13 are reproduced with the first to third VTRs 14 to 16 for use.

In the edit list L1, there are stored not only "Mix" indicating the kind of the special effect but also "Time during which special effect is added (n seconds)", one of various setting information for the kind, as the contents of the "Effect".

Thus, the control section 24 of the plug-in editor 3 is adapted to, by reading the edit list L1 stored in' the database 26 after live broadcast ends and controlling the switcher control circuit 23 and the VTR control circuit 25 in accordance with the edit list L1, be able to easily generate the same live-broadcast pictures as those broadcasted lively as edited pictures in accordance with the edit list L1.

Substantially, as shown in Fig. 4, the control section 24 of the plug-in editor 3 selects the reproduced picture signals VS14 from the first VTR 14 corresponding to the camera picture signals KS11 of the first camera 11 with the input selection circuit 21 and outputs them to the recording VTR 6 during the period from the start time t1 until the end time t2.

Then, the control section 24 of the plug-in editor 3 selects the reproduced picture signals VS15 from the second VTR 15 corresponding to the camera picture signals KS12 of the second camera 12 with the input selection circuit 21 and outputs them to the recording VTR 6 during the period from the start time t3 (=the end time t2) until the end time t4

The control section 24 of the plug-in editor 3 then selects the reproduced picture signals VS16 from the third VTR 16 corresponding to the camera picture signals KS13 of the third camera 16 with the input selection circuit 21, adds a predetermined special effect "Mix" to the reproduced picture signals VS16 for n seconds and outputs them to the recording VTR 6 during a period of n seconds from the start time t5.

Then, the control section 24 of the plug-in editor 3 continuously selects the reproduced picture signals VS16 from the third VTR 16 corresponding to the camera picture signals KS13 of the third camera 16 with the input selection circuit 21 and outputs them to the recording.

The recording VTR 6 is adapted to be able to generate an edited tape 31 on which edited pictures based on the contents of the edit list L1 are recorded as shown in Fig. 5 by recording the reproduced picture signals VS14, the reproduced picture signals VS15 and the reproduced picture signals VS16, which are sequentially sent from the plug-in editor 3 in accordance with the edit list L1, to the video tape.

As a result, in the edited tape 31, there are recorded the reproduced picture signals VS14 corresponding to the camera picture signals KS11 of the first camera 11 for the actual recording time from T1 until T2; the reproduced picture signals VS15 corresponding to the camera picture signals KS12 of the second camera 12 are recorded for the actual recording time from T2 until T3; and the reproduced picture signals VS15 corresponding to the camera picture signals KS13 of the third camera 13, to which a special effect has been added for n seconds, are recorded after that.

### (3) Digest-version edit list creation procedure with a plug-in editor

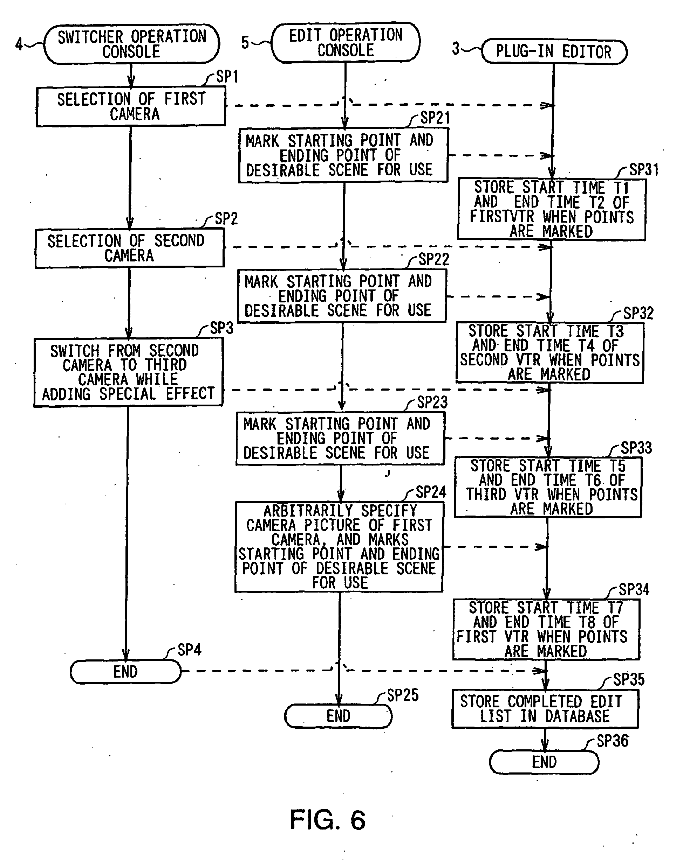

Description will be now made on a digest-version edit list creation procedure for creating a digest-version edit list including only highlight scenes based on a switcher operation performed by a worker on the edit operation console 5 with the control section 24 of the plug-in editor 3 in the video editing apparatus 1 while live broadcast is actually being performed, using the flowchart in Fig. 6.

The switcher operations on the switcher operation console 4 (steps SP1 to SP4) are similar to those performed in the edit list creation procedure (Fig. 2), and the difference of the digest-version edit list creation procedure is the edit operation console 5 and the processing to be performed by the plug-in editor 3.

At step SP1, on recognizing that a switcher operation for selecting and determining the first camera 11 has been performed by the worker, the switcher operation console 4 outputs a control signal S4 for switching camera picture signals KS11 of the first camera 11 to be used for broadcast output to the plug-in editor 3, and the process proceeds to the next step SP2.

At step SP21, on recognizing that the starting point and the ending point of a highlight scene, which the worker desires to use in the edit processing later, among the camera picture signals KS11 have been marked by the worker while the camera picture signals KS11 are being outputted for broadcast by the first camera 11 selected and determined by the switcher operation console 4, the edit operation console 5 outputs status signals indicating that the starting point and the ending point have been determined to the plug-in editor 3 as control signals S5 when the starting point and the ending point are determined. The process then proceeds to the next step SP22.

At step SP31, on receiving the control signals S5 from the edit operation console 5, the control section 24 of the plug-in editor 3 recognizes that the timings when it received the control signals S5 as the starting point and the ending point of the highlight scene among the camera picture signals KS11 and stores the time codes of the first VTR 14 indicating the timings of the recognized starting point and ending point as the start time t1 and the end time t2. The process then proceeds to the next step SP32.

Note that the control section 24 of the plug-in editor 3 keeps on outputting the camera picture signals KS11 from the first camera 11 for broadcast while recording the camera picture signals KS11 to a video tape with the first VTR 14 after selecting them with the input selection circuit 21 until the second camera 12, for example, is selected and determined next for switching thereto in accordance with a control signal S4 from the switcher operation console 4.

The control section 24 of the plug-in editor 3 is adapted to actually store the time code indicating, for example, one minute before the timing as the start time t1 so that the highlight scene among the camera picture signals KS11 actually selected and determined on the edit operation console 5 by the worker is included in the reproduced picture signals VS14 of the first VTR 14 to be used as an editing target without fail. The control section 24 of the plug-in editor 3 does the same when storing start time in the subsequent process.

At step SP2, on recognizing that a switcher operation for selecting and determining the second camera 12 next has been performed by the worker while the camera picture signals KS11 of the first camera 11 are being provided for broadcast output, the switches operation console 4 outputs a control signal S4 for switching the camera picture signals KS12 of the second camera 12 to be used for broadcast output to the plug-in editor 3, and the process proceeds to the next step SP3.

At step SP22, on recognizing that the starting point and the ending point of a highlight scene, which the worker desires to use in the edit processing later, among camera picture signals KS12 have been marked by the worker while the camera picture signals KS12 are being broadcasted by the second camera 12 selected and determined by the switcher operation console 4, the edit operation console 5 outputs status signals indicating that the starting point and the ending point have been determined to the plug-in editor 3 as control signals S5 when the starting point and the ending point are determined. The process then proceeds to the next step SP22

At step SP32, on receiving the control signals S5 from the edit operation console 5, the control section 24 of the plug-in editor 3 recognizes that the timings when it received the control signals S5 as the starting point and the ending point of the highlight scene among the camera picture signals KS12 and stores the time codes of the second VTR 15 indicating the timings of the recognized starting point and ending point as the start time t3 and the end time t4. The process then proceeds to the next step SP33.

Notes that similarly to the case of step SP31, the control section 24 of the plug-in editor 3 selects the camera picture signals KS12 of the second camera 12 with the input selection circuit 21 and then outputs them for broadcast while recording the camera picture signals KS12 to a video tape with the second VTR 15.

At step SP3, on recognizing that a switcher operation for switching the second camera 12 to the third camera 13 while adding a special effect has been performed when the camera picture signals KS12 of the second camera 11 are being provided for broadcast output, the switcher operation console 4 outputs a control signal S4 for switching the second camera 12 to the third camera 13 while adding a special effect, to the plug-in editor 3. The process then proceeds to the next step SP4 and ends.

At step SP23, on recognizing that the starting point and the ending point of a highlight scene, which the worker desires to use in the edit processing later, among camera picture signals KS13 have been marked by the worker while the camera picture signals KS13 of the third camera 13 are being broadcasted by the third camera 13 selected and determined by the switcher operation console 4, the edit operation console 5 outputs status signals indicating that the starting point and the ending point have been determined to the plug-in editor 3 as control signals S5 when the starting point and the ending point are determined. The process then proceeds to the next step SP24.

At step SP33, on receiving the control signals S5 from the edit operation console 5, the control section 24 of the plug-in editor 3 recognizes that the timings when it received the control signals S5 as the starting point and the ending point of the highlight scene among the camera picture signals KS13 and stores the time codes of the third VTR 16 indicating the timings of the recognized starting point and ending point as the start time t5 and the end time t6. The process then proceeds to the next step SP34.

At step SP24, on recognizing that the first camera 11, for example, has been specified and the starting point and the ending point of a highlight scene, which the worker desires to use, among camera picture signals KS11 of the first camera 11 have been marked by the worker while the camera picture signals KS13 of the third camera 13 are being broadcasted, the edit operation console 5 outputs status signals indicating that the starting point and the ending point have been determined to the plug-in editor 3 as control signals S5 when the starting point and the ending point are determined. The process then proceeds to the next step SP25 and ends.

At step SP34, on receiving the control signals S5 from the edit operation console 5, the control section 24 of the plug-in editor 3 recognizes that the timings when it received the control signals S5 as the starting point and the ending point of the highlight scene among the camera picture signals KS11 of the first camera 11 and stores the time codes of the first VTR 14 indicating the timings of the recognized starting point and ending point as the start time t7 and the end time t8. The process then proceeds to the next step SP35.

At step SP35, since the switcher operation on the edit operation console 5 has ended, the control section 24 of the plug-in editor 3 creates a digest-version edit list L2 comprising the start time t1 and end time t2 of the first VTR 14, the start time t3 and end time t4 of the second VTR 15, the start time t5 and the end time t6 of the third VTR 16, the start time t7 and the end time t8 of the first VTR 14, and the kind of the special effect (Cut) stored at steps SP31 to SP34, and stores it in the database 26. The process then proceeds to the next step SP36 and ends

As described above; the control section 24 of the plug-in editor 3 is adapted to store each of the starting points (t1, t3, t5 and t7) and the ending points (t2, t4, t6 and t8) of highlight scenes of the first to third cameras 11 to 13, which have been determined based on the edit operations by the worker on the edit operation console 5, as time codes, and create a digest-version edit list L2 including only the highlight scenes using the time codes

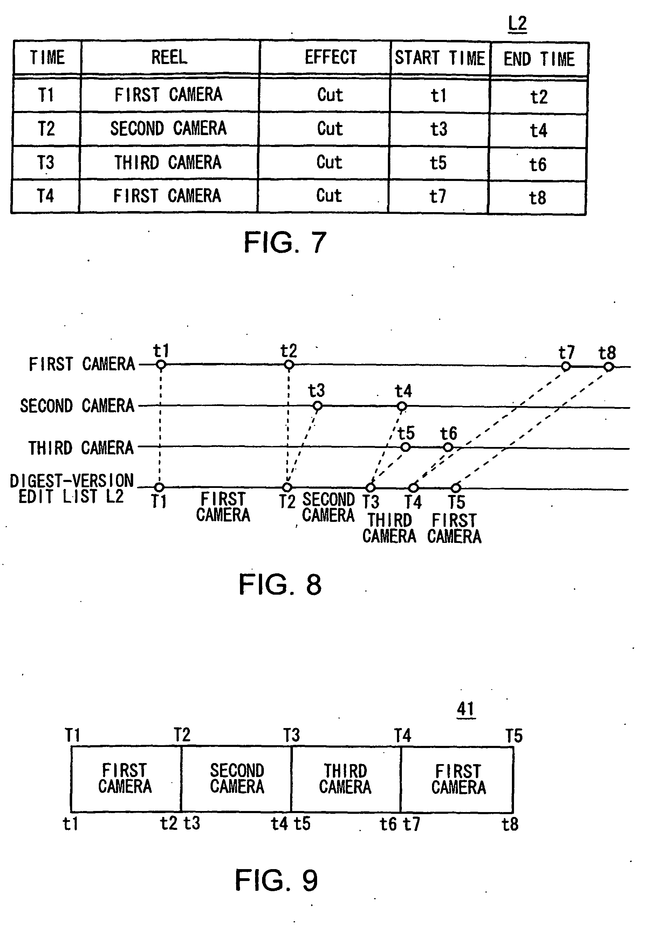

As shown in Fig. 7, the digest-version edit list L2 created as described above shows "Time" indicating times (T1, T2, T3 and T4) at which digest-version edited pictures after highlight-scene edit processing were newly recorded to a video tape with the recording VTR 6, "Reel" indicating the first to third cameras 11 to 13 targeted by camera selection, "Effect" indicating the kind of the special effect (Cut), "Start Time (t1, t3, t5 and t7)" and "End Time (t2, t4, t6 and t8)" indicating the time when the camera picture signals KS11 to KS13 of the first camera 11, the second camera 12, and the third camera 13 are used as the reproduced picture signals VS14 to VS16 reproduced by the first to third VTRs 14 to 16.

Thus, the control section 24 of the plug-in editor 3 is adapted to, by reading the digest-version edit list L2 stored in the database 26 after live broadcast ends and controlling the switcher control circuit 23 and the VTR control circuit 25 in accordance with the digest-version edit list L2, be able to easily generate digest-version edited pictures in accordance with the digest-version edit list L2.

Substantially, as shown in Fig. 8, the control section 24 of the plug-in editor 3 selects the reproduced picture signals VS14 from the first VTR 14 corresponding to the camera picture signals RS11 of the first camera 11 with the input selection circuit 21 and outputs them to the recording VTR 6 during the period from the start time t1 until the end time t2.

Then, the control section 24 of the plug-in editor 3 selects the reproduced picture signals VS15 from the second VTR 15 corresponding to the camera picture signals KS12 of the second camera 12 with the input selection circuit 21 and outputs them to the recording VTR 6 during the period from the start time t3 until the end time t4.

Subsequently, the control section 24 of the plug-in editor 3 selects the reproduced picture signals VS16 from the third VTR 16 corresponding to the camera picture signals KS13 of the third camera 13 with the input selection circuit 21 and outputs them to the recording VTR 6 during the period from the start time t5 until the end time t6.

Finally, the control section 24 of the plug-in editor selects the reproduced picture signals VS14 from the first VTR 14 corresponding to the camera picture signals KS11 of the first camera 11 with the input selection circuit 21 and outputs them to the recording VTR 6 during the period from the start time t7 until the end time t8.

The recording VTR 6 is adapted to be able to generate a digest-version edited tape 41 on which digest-version edited pictures based on the contents of the digest-version edit list L2 are recorded as shown in Fig. 9 by recording the reproduced picture signals VS14 to VS16, which are sequentially sent from the plug-in editor 3 in accordance with the digest-version edit list L2, to the video tape.

As a result, in the digest-version edited tape 41, there recorded the reproduced picture signals VS14 of the first camera 11 are recorded for the actual recording time from T1 to T2; the reproduced picture signals VS15 are recorded for the actual recording time from T2 to T3; the reproduced picture signals VS16 are recorded for the actual recording time from T3 to T4; and finally the reproduced picture signals VS14 of the first camera 11 are again recorded for the actual recording time from T4 to T5.

Though the digest-version edit list L2 is created so that picture signals are switched by "Cut", it is possible to switch pictures while adding special effects described above when actually recording pictures.

### (4) Operations and effects

In the above configuration, while sequentially outputting the camera picture signals KS11 to KS13 for live broadcast based on any of the first to third cameras 11 to 13 being switched by a switcher operation on the switcher operation console 4, the control section 24 of the plug-in editor 3 in the video editing apparatus 1 temporarily stores the start time (t1, t3 and t5) and the end time (t2 and t4) at which any of the first to third cameras 11 to 13 is selected and determined based on the switcher operation, the kind of the special effect (Cut, Mix) and various setting information (n seconds) for the kind as an operation history.

The control section 24 of the plug-in editor 3 then creates an edit list L1 using the operation history and stores it in the database 26. Accordingly, it is possible for the control section 24 of the plug-in editor 3 to generate the edit list L1 based on the operation history of switcher operations while performing live broadcast with the first to third cameras 11 to 13.

Thus, the control section 24 of the plug-in editor 3 enables generation of edited picture data immediately after live broadcast, based on the edit list L1 created simultaneously with the live broadcast, without forcing a worker to do troublesome work to newly create an edit list L1 immediately after the live broadcast.

Furthermore, on recognizing that the starting point and the ending point of a highlight scene which the worker desires to use later have been marked with the edit operation console 5 among the camera picture signals KS11 to KS13 while sequentially outputting the camera picture signals KS11 to KS13 based on any of the first to third cameras 11 to 13 being switched by a switcher operation on the switcher operation console 4, the control,section 24 of the plug-in editor 3 temporarily stores the start time (t1, t3, t5 and t7) and the end time (t2, t4, t6 and t8) of the first to third VTRs 14 to 16 indicating the timings of the starting point and the ending point, and the kind of the special effect (Cut) as an operation history.

The control section 24 of the plug-in editor 3 then generates a digest-version edit list L2 using the operation history and stores it in the database 26. Accordingly, it is possible for the control section 24 of the plug-in editor 3 to generate the digest-version edit list L2 based on the operation history of edit operations performed on the edit operation console 5 to collect only highlight scenes while performing live broadcast with the first to third cameras 11 to 13.

Thus, the control section 24 of the plug-in editor 3 enables generation of digest-version edited picture data in which only highlight scenes are collected immediately after live broadcast, based on the digest-list L2 created simultaneously with the live broadcast, without forcing a worker to do troublesome work to newly create a digest-version edit list L2 immediately after the live broadcast.

According to the configuration described above, it is possible for the control section 24 of the plug-in editor 3 in the video editing apparatus 1 to temporarily store operation histories based on switcher operations on the switcher operation console 4 and edit operations on the edit operation console 5 almost simultaneously with performing live broadcast with the first to third cameras 11 to 13, and create an edit list L1 and a digest-version edit list L2 based thereon.

Accordingly, it is possible for a worker to obtain the edit list L1 and the digest list L2 without doing troublesome and time-consuming work such as performing switcher operations and edit operations while viewing reproduced picture signals VS14 to VS16 obtained by reproduction with the first to third VTRs 14 to 16 after live broadcast with the first to third cameras 11 to 13 as have been done in prior techniques.

### (5) Other embodiments

Though description has been made on the case where the plug-in editor 3 as a picture material editing apparatus is provided with an edit function in addition to a switcher function in the embodiments described above, the present invention is not limited thereto, and such a configuration in which the switcher function and the edit function are separated may be also possible

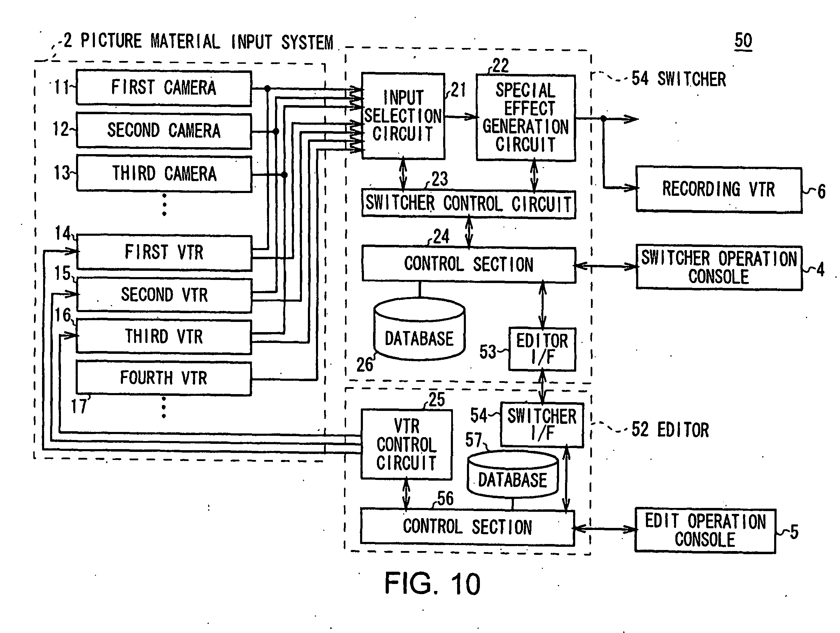

For example, as shown in Fig. 10, in which such sections that correspond to those in Fig. 1 are denoted by the same symbols, the video editing apparatus 50 is provided with a switcher 51 having only a switcher function and an editor 52 having only an edit function as separate units, instead of the plug-in editor 3 (Fig. 1), and the control section 24 of the switcher 51 and a control section 56 of the editor 52 are adapted to mutually send and receive control signals and the like via an editor interface 53 and a switcher interface 54.

In this case also, the video editing apparatus 50 has the same functions as the plug-in editor 3 of the video editing apparatus 1, which are provided by the switcher 51 and the editor 52, and is adapted to be able to create an edit list L1 and a digest-version list L2 similarly to the plug-in editor 3.

Though description has been made on the case where the edit list L1 and the digest-version edit list L2 are created while the camera picture signals KS11 to KS13 are being lively broadcasted from the first to third cameras 11 to 13 in the embodiments described above, the present invention is not limited thereto, and the edit list L1 and the digest-version edit list L2 may be created during recording at a studio and the like.

Furthermore, though description has made on the case where a video tape is used as a recording medium for picture materials in the embodiments described above, the present invention is not limited thereto, and a disk-type medium (for example, CD-R (compact disc-recordable), CD-RW (compact disk-rewritable), DVD (digital versatile disc), hard disk and the like) may be used as the recording medium. In this case, non-linear editing can be performed.

Furthermore, "Cut", "Mix", "Wipe", "Key" and the like are cited as examples of the kinds of special effects to be added by the special effect generation circuit 22 in the embodiments described above, the present invention is not limited thereto, and other various special effects such as zoom-in, zoom-out and dissolve may be added.

Furthermore, though description has been made on the case where the plug-in editor 3 as a picture material editing apparatus is configured with the input selection circuit 21, the switcher control circuit 23 and the control section 24 as picture material switching means, and the control section 24 or the control section 56 as edit list creation means, the present invention is not limited thereto, and the plug-in editor 3 as a picture material editing apparatus may be configured in accordance with other various circuit configurations.

As described above, according to the present invention, multiple picture materials inputted from multiple sources are switched at an arbitrary timing with picture material switching means having a switcher function, and an edit list is created based on the switching operation for switching the multiple picture materials. Thereby, the edit list based on the operation of switching multiple picture materials can be automatically created. Thus, it is possible to easily create an edit list in a short time without forcing a worker to spend a lot of time and do troublesome work. Accordingly, there are realized a picture material editing apparatus and a picture material editing method capable of easily creating an edit list in a short time without forcing a worker to spend a lot of time and do troublesome work.

Furthermore, according to the present invention, by creating an edit list simultaneously with a switching operation for switching multiple picture materials using a switcher function, the edit list can be provided almost simultaneously with the operation of switching picture materials, so that, immediately after that, edit processing based on the edit list can be promptly executed.

Furthermore, according to the present invention, by creating an edit list based on the kind of the special effect specified when picture materials are switched and various setting information for the kind in addition to a switching operation, generation of edited picture data by switching picture materials while adding a special effect to the picture materials can be also easily performed in a short time based on the edit list

Furthermore, according to the present invention, when edit processing for connecting only highlight scenes among multiple picture materials is executed as the above-mentioned switching operation, a digest-version edit based on the edit processing is created. Accordingly, it is possible to easily create a digest-version edit list in a short time without forcing a worker to spend a lot of time and do troublesome work.

## Claims

1. A picture material editing apparatus comprising:
picture material switching means (21) having a switcher function of switching and outputting multiple picture materials inputted from multiple sources (11..13) at an arbitrary timing; and
edit list creation means (24) for creating an edit list for a switching operation for switching the multiple picture materials with the switcher function, wherein said edit list creation means (24) is adapted to create the edit list based on and simultaneously with a first switching operation for switching the multiple picture materials inputted from the multiple sources (11..13) by using the switcher function,
**characterized by**
means (5) for selecting highlight scenes of the multiple picture materials from the multiple picture materials outputted by said picture material switching means (21); wherein
the multiple picture materials are inputted from multiple cameras (11..13) for live broadcast and said edit list creation means (24) is adapted to create a digest version of the edit list which collects only the selected highlight scenes of the multiple picture materials immediately after the live broadcast is finished; and
recording and reproducing means (14..16) for recording, while said edit list is created by said edit list creation means (24), each of said multiple picture materials that are inputted from said multiple cameras (11..13) and switched by using the switcher function, and for reproducing the recorded multiple picture materials based on the digest version of the edit list created by said edit list creation means (24); wherein
said picture material switching means (21) is adapted to switch and output, in a second switching operation that is performed based on the digest version of the edit list created by said edit list creation means (24), the multiple picture materials reproduced by said recording and reproducing means (14..16).

2. The picture material editing apparatus according to Claim 1, further comprising
means (4) for inputting switching operation commands by a user; wherein
said picture material switching means (21) is adapted to switch and output the multiple picture materials inputted from said cameras (11..13) based on said switching operation commands; and
said edit list creation means (24) is adapted to record (SP11..SP13) switching states and switching timing of the first switching operation performed by said picture material switching means (21).

3. The picture material editing apparatus according to Claim 1 or 2, wherein
said edit list creation means (24) is adapted to create the edit list by recognizing (SP13) kind of a special effect added to the picture materials and various setting information for the special effect in addition to the switching operation.

4. A picture material editing method comprising:
a picture material switching step (SP1..SP3) of switching and outputting multiple picture materials inputted from multiple sources (11..13) via picture material switching means (21) having a switcher function, at an arbitrary timing; and
an edit list creation step (24) of creating an edit list for a switching operation for switching the multiple picture materials performed at the picture material switching step (SP1..SP3), wherein said edit list is created based on and simultaneously with a first switching operation for switching the multiple picture materials inputted from the multiple sources (11..13) by using the switcher function,
**characterized by**
selecting (5) highlight scenes of the multiple picture materials from the multiple picture materials outputted at said picture material switching step (SP1..SP3); wherein
the multiple picture materials are inputted from multiple cameras (11..13) for live broadcast and, at said edit list creation step (24), a digest version of the edit list which collects only the selected highlight scenes of the multiple picture materials is created immediately after the live broadcast is finished; and
recording (14..16), while said edit list is created by said edit list creation means (24), each of said multiple picture materials that are inputted from said multiple cameras (11..13) and switched by using the switcher function, and reproducing (14..16) the recorded multiple picture materials based on the digest version of the edit list created at said edit list creation step (24) ; and
switching and outputting (21), in a second switching operation that is performed based on the digest version of the edit list created at said edit list creation step (24), the reproduced multiple picture materials.

5. The picture material editing method according to Claim 4, further comprising
a step (4) of receiving switching operation commands from a user; wherein
at said picture material switching step (SP1..SP3), said picture material switching means (21) switches and outputs the multiple picture materials inputted from said cameras (11..13) based on said switching operation commands; and
at said edit list creation step (24), switching states and switching timing of the first switching operation performed by said picture material switching means (21) are recoded (SP11..SP13) while said first switching operation is performed.

6. The picture material editing method according to Claim 4 or 5, wherein,
at said edit list creation step (24), the edit list is created by recognizing (SP13) kind of a special effect added to the picture materials and various setting information for the special effect in addition to the switching operation.

## Patentansprüche

1. Bildmaterial-Editiervorrichtung, umfassend:
eine Bildmaterial-Schalteinrichtung (21) mit einer Schalterfunktion zum Schalten und Abgeben einer Vielzahl von Bildmaterialien, die von einer Vielzahl von Quellen (11...13) eingangsseitig zu einer beliebigen Zeit zugeführt sind,
und eine Editierlisten-Erzeugungseinrichtung (24) zum Erzeugen einer Editierliste für eine Schaltoperation zum Schalten der Vielzahl von Bildmaterialien mit der Schalterfunktion,
wobei die Editierlisten-Erzeugungseinrichtung (24) imstande ist, die Editierliste auf der Grundlage einer ersten Schaltoperation zum Schalten der Vielzahl von Bildmaterialien, die von der Vielzahl der Quellen (11...13) eingangsseitig zugeführt sind, und gleichzeitig mit dieser Operation durch Ausnutzen der Schalterfunktion zu erzeugen,
**gekennzeichnet**
**durch** eine Einrichtung (5) zur Auswahl von Höhepunktszenen der Vielzahl der Bildmaterialien aus der Vielzahl der durch die Bildmaterial-Schalteinrichtung (21) abgegebenen Bildmaterialien,
wobei die Vielzahl der Bildmaterialien von einer Vielzahl von Kameras (11...13) für eine Livesendung eingangsseitig zugeführt wird und die Editierlisten-Erzeugungseinrichtung (24) imstande ist, eine lediglich die ausgewählten Höhepunktszenen aus der Vielzahl von Bildmaterialien unmittelbar nach Beendigung der Livesendung sammelnde Kurzfassungsversion der Editierliste zu erzeugen,
und **durch** eine Aufzeichnungs- und Wiedergabeeinrichtung (14...16), mit der während der Erzeugung der Editierliste durch die Editierlisten-Erzeugungseinrichtung (24) jedes der Vielzahl von Bildmaterialien, die von der Vielzahl von Kameras (11...13) eingangsseitig zugeführt und unter Heranziehung der Schalterfunktion geschaltet sind, aufgezeichnet wird,
und mit der die aufgezeichnete Vielzahl von Bildmaterialien auf der Grundlage der Kurzfassungsversion der durch die Editierlisten-Erzeugungseinrichtung (24) erzeugten Editierliste wiedergegeben wird,
wobei die Bildmaterial-Schalteinrichtung (21) imstande ist, in einer zweiten Schaltoperation, die auf der Grundlage der Kurzfassungsversion der durch die Editierlisten-Erzeugungseinrichtung (24) erzeugten Editierliste ausgeführt wird, die durch die Aufzeichnungs- und Wiedergabeeinrichtung (14...16) wiedergegebenen Vielzahl der Bildmaterialien zu schalten und abzugeben.

2. Bildmaterial-Editiervornchtung nach Anspruch 1, ferner umfassend eine Einrichtung (4) zur Eingabe von Schaltoperationsbefehlen durch einen Benutzer,
wobei die Bildmaterial-Schalteinrichtung (21) imstande ist, die Vielzahl der von den Kameras (11...13) eingangsseitig zugeführten Bildmaterialien auf der Grundlage der Schaltoperationsbefehle zu schalten und abzugeben,
und wobei die Editierlisten-Erzeugungseinrichtung (24) imstande ist, Schaltzustände und Schaltzeiten der durch die Bildmaterial-Schalteinrichtung (21) ausgeführten ersten Schaltoperation aufzuzeichnen (SP11...SP13).

3. Bildmaterial-Editiervorrichtung nach Anspruch 1 oder 2, wobei die Editierlisten-Erzeugungseinrichtung (24) imstande ist, die Editierliste **dadurch** zu erzeugen, dass die Art eines den Bildmaterialien hinzugefügten Spezialeffektes und verschiedene Einstellinformationen für den Spezialeffekt zusätzlich zu der Schaltoperation erkannt(SP13) werden.

4. Bildmaterial-Editierverfahren, umfassend:
einen Bildmaterial-Schaltschritt (SP1...SP3) zum Schalten und Abgeben einer Vielzahl von Bildmaterialien, die von einer Vielzahl von Quellen (11...13) durch eine über eine Schalterfunktion verfügende Bildmaterial-Schalteinrichtung (21) zu einem beliebigen Zeitpunkt eingangsseitig zugeführt sind,
und einen Editierlisten-Erzeugungsschritt (24) zum Erzeugen einer Editierliste für eine beim Bildmaterial-Schaltschritt (SP1...SP3) ausgeführten Schaltoperation zum Schalten der Vielzahl von Bildmaterialien,
wobei die Editierliste auf der Grundlage einer ersten Schaltoperation zum Schalten der Vielzahl von Bildmaterialien, die von der Vielzahl der Quellen (11...13) eingangsseitig zugeführt sind, und gleichzeitig mit dieser Operation durch Ausnutzen der Schalterfunktion erzeugt wird,
**dadurch gekennzeichnet,**
**dass** Höhepunktszenen der Vielzahl von Bildmaterialien aus der Vielzahl der beim Bildmaterial-Schaltschritt (SP1...SP3) abgegebenen Vielzahl von Bildmaterialien ausgewählt (5) werden,
wobei die Vielzahl der Bildmaterialien von einer Vielzahl von Kameras (11...13) für eine Livesendung eingangsseitig zugeführt wird und bei dem Editierlisten-Erzeugungsschritt (24) eine Kurzfassungsversion der Editierliste, in der lediglich die ausgewählten Höhepunktszenen der Vielzahl von Bildmaterialien gesammelt sind, unmittelbar nach Abschluss der Livesendung erzeugt wird,
**dass** während der Erzeugung der Editierliste durch die Editierlisten-Erzeugungseinrichtung (24) jedes der Vielzahl von Bildmaterialien aufgezeichnet (14...16) wird, die von der Vielzahl von Kameras (11...13) eingangsseitig zugeführt und unter Heranziehung der Schalterfunktion geschaltet sind,
**dass** die aufgezeichnete Vielzahl von Bildmaterialien auf der Grundlage der Kurzfassungsversion der bei dem Editierlisten-Erzeugungsschritt (24) erzeugten Editierliste wiedergegeben (14...16) wird
und **dass** in einer zweiten Schaltoperation, die auf der Grundlage der Kurzfassungsversion der bei dem Editierlisten-Erzeugungsschritt (24) erzeugten Editierliste ausgeführt wird, die wiedergegebene Vielzahl der Bildmaterialien geschaltet und abgegeben (21) wird.

5. Bildmaterial-Editierverfahren nach Anspruch 4, ferner umfassend einen Schritt (4) zum Empfangen von Schaltoperationsbefehlen von einem Benutzer,
wobei bei dem Bildmaterial-Schaltschritt (SP1...SP3) die Bildmaterial-Schalteinrichtung (21) die Vielzahl der eingangsseitig von den Kameras (11...13) eingangsseitig zugeführten Bildmaterialien auf der Grundlage der Schaltoperationsbefehle schaltet und abgibt
und wobei bei dem Editierlisten-Erzeugungsschritt (24) Schaltzustände und Schaltzeiten der durch die Bildmaterial-Schalteinrichtung (21) ausgeführten ersten Schaltoperation aufgezeichnet (SP11...SP13) werden, während die erste Schaltoperation ausgeführt wird.

6. Bildmaterial-Editierverfahren nach Anspruch 4 oder 5, wobei bei dem Editierlisten-Erzeugungsschritt (24) die Editierliste **dadurch** erzeugt wird, dass die Art eines den Bildmaterialien hinzugefügten Spezialeffektes und verschiedene Einstellinformationen für den Spezialeffekt zusätzlich zu der Schaltoperation erkannt (SP13) werden.

## Revendications

1. Dispositif d'édition de document vidéo comprenant :
un moyen de commutation de document vidéo (21) ayant une fonction de commutateur consistant à commuter et à fournir en sortie de multiples documents vidéo reçus en entrée depuis de multiples sources (11..13) à une cadence quelconque, et
un moyen de création de liste d'édition (24) destiné à créer une liste d'édition pour une opération de commutation destinée à commuter les multiples documents vidéo avec la fonction de commutateur, où ledit moyen de création de liste d'édition (24) est conçu pour créer la liste d'édition sur la base d'une première opération de commutation, et simultanément à celle-ci, destinée à commuter les multiples documents vidéo reçus en entrée depuis les multiples sources (11..13) en utilisant la fonction de commutateur,
**caractérisé par**
un moyen (5) destiné à sélectionner des scènes mises en évidence des multiples documents vidéo à partir des multiples documents vidéo fournis en sortie par ledit moyen de commutation de document vidéo (21), dans lequel
les multiples documents vidéo sont reçus en entrée depuis de multiples caméras (11..13) pour une diffusion en direct et ledit moyen de création de liste d'édition (24) est conçu pour créer une version abrégée de la liste d'édition qui ne recueille que les scènes mises en évidence sélectionnées des multiples documents vidéo immédiatement après que la diffusion en direct est terminée, et
un moyen d'enregistrement et de reproduction (14..16) destiné à enregistrer, alors que ladite liste d'édition est créée par ledit moyen de création de liste d'édition (24), chacun desdits multiples documents vidéo qui sont reçus en entrée depuis lesdites multiples caméras (11..13) et commutés en utilisant la fonction de commutateur, et destiné à reproduire les multiples documents vidéo enregistrés sur la base de la version abrégée de la liste d'édition créée par ledit moyen de création de liste d'édition (24), dans lequel
ledit moyen de commutation de document vidéo (21) est conçu pour commuter et fournir en sortie, dans une deuxième opération de commutation qui est exécutée sur la base de la version abrégée de la liste d'édition créée par ledit moyen de création de liste d'édition (24), les multiples documents vidéo reproduits par ledit moyen d'enregistrement et de reproduction (14..16).

2. Dispositif d'édition de document vidéo selon la revendication 1, comprenant en outre
un moyen (4) destiné à recevoir en entrée des instructions d'opérations de commutation par un utilisateur, dans lequel
ledit moyen de commutation de document vidéo (21) est conçu pour commuter et fournir en sortie les multiples documents vidéo reçus en entrée depuis lesdites caméras (11..13) sur la base desdites instructions d'opérations de commutation, et
ledit moyen de création de liste d'édition (24) est conçu pour enregistrer (SP11..SP13) des états de commutation et un instant de commutation de la première opération de commutation exécutée par ledit moyen de commutation de document vidéo (21).

3. Dispositif d'édition de document vidéo selon la revendication 1 ou 2, dans lequel
ledit moyen de création de liste d'édition (24) est conçu pour créer la liste d'édition en reconnaissant (SP13) un type d'effet spécial ajouté aux documents vidéo et diverses informations de réglage pour l'effet spécial en plus de l'opération de commutation.

4. Procédé d'édition de document vidéo comprenant :
une étape de commutation de document vidéo (SP1..SP3) consistant à commuter et fournir en sortie de multiples documents vidéo reçus en entrée depuis de multiples sources (11..13) par le biais d'un moyen de commutation de document vidéo (21) ayant une fonction de commutateur, à une cadence quelconque, et
une étape de création de liste d'édition (24) consistant à créer une liste d'édition pour une opération de commutation destinée à commuter les multiples documents vidéo, exécutée à l'étape de commutation de document vidéo (SP1..SP3), où ladite liste d'édition est créée sur la base d'une première opération de commutation, et simultanément à celle-ci, destinée à commuter les multiples documents vidéo reçus en entrée depuis les multiples sources (11..13) en utilisant la fonction de commutateur,
**caractérisé par**
la sélection (5) de scènes mises en évidence des multiples documents vidéo à partir des multiples documents vidéo fournis en sortie à ladite étape de commutation de document vidéo (SP1..SP3), où
les multiples documents vidéo sont reçus en entrée depuis de multiples caméras (11..13) pour une diffusion en direct et, à ladite étape de création de liste d'édition (24), une version abrégée de la liste d'édition qui ne recueille que les scènes mises en évidence sélectionnées des multiples documents vidéo est créée immédiatement après que la diffusion en direct est terminée, et
l'enregistrement (14..16), alors que ladite liste d'édition est créée par ledit moyen de création de liste d'édition (24), de chacun desdits multiples documents vidéo qui sont reçus en entrée depuis lesdites multiples caméras (11..13) et commutés en utilisant la fonction de commutateur, et la reproduction (14..16) des multiples documents vidéo enregistrés sur la base d'une version abrégée de la liste d'édition créée à ladite étape de création de liste d'édition (24), et
la commutation et la fourniture en sortie (21), dans une deuxième opération de commutation qui est exécutée sur la base de la version abrégée de la liste d'édition créée à ladite étape de création de liste d'édition (24), des multiples documents vidéo reproduits.

5. Procédé d'édition de document vidéo selon la revendication 4, comprenant en outre
une étape (4) consistant à recevoir des instructions d'opérations de commutation d'un utilisateur, où
à ladite étape de commutation de document vidéo (SP1..SP3), ledit moyen de commutation de document vidéo (21) commute et fournit en sortie les multiples documents vidéo reçus en entrée depuis lesdites caméras (11..13) sur la base desdites instructions d'opérations de commutation, et
à ladite étape de création de liste d'édition (24), les états de commutation et l'instant de commutation de la première opération de commutation exécutée par ledit moyen de commutation de document vidéo (21) sont enregistrés (SP11..SP13) alors que ladite première opération de commutation est exécutée.

6. Procédé d'édition de document vidéo selon la revendication 4 ou 5, dans lequel,
à ladite étape de création de liste d'édition (24), la liste d'édition est créée en reconnaissant (SP13) un type d'effet spécial ajouté aux documents vidéo et diverses informations de réglage pour l'effet spécial en plus de l'opération de commutation.
